# EUROPÄISCHE PATENTSCHRIFT

(11) **EP 2 767 389 B1**
(45) Veröffentlichungstag und Bekanntmachung des Hinweises auf die Patenterteilung: **08.06.2016**
(21) Anmeldenummer: 13005571.8
(22) Anmeldetag: 29.11.2013
(51) Int. Cl.: B30B 5/06, B32B 37/06, B30B 15/34, H05B 6/76, H05B 6/78, B27N 3/24, B32B 37/10

(54) **Doppelbandheizpresse**
Double strip heating press
Presse à chaud à double bande

(30) Priorität: 15.02.2013 DE 102013101512
(43) Veröffentlichungstag der Anmeldung: 20.08.2014
(73) Patentinhaber: Wemhöner Surface Technologies GmbH & Co. KG, 32052 Herford (DE)
(72) Erfinder: Melies, Hans, 33449 Langenberg (DE); Linhorst, Christian, 33824 Werther (DE)
(74) Vertreter: Rolf, Gudrun, LL.M

(56) Entgegenhaltungen:
- WO-A1-02/074525
- DE-A1- 10 157 601
- DE-B- 1 029 963
- US-A- 3 795 470
- US-A- 4 570 045
- US-B1- 6 287 410

## Beschreibung

Die Erfindung betrifft eine Doppelbandheizpresse zur Herstellung einzelner Sandwich-Leichtbauplatten gemäß dem Oberbegriff des ersten Patentanspruches.

Es ist ein Verfahren und eine Vorrichtung zum Heißverpressen von mit Klebstoff versehenden Komponentenstapeln zur Herstellung von Sandwich-Leichtbauplatten mit integriertem Holzrahmenkern bekannt, EP 2 527 144 A1, dessen Vorrichtung sich zur Erwärmung des Klebstoffes mehrerer Mikrowellenstrahlungsquellen bedient, die über Hohlleiter und eine punktuelle vertikale Einstrahlung zwischen einzelnen schmalen Tragrollen auf die Oberflächen der Transportbänder einwirken.

Nachteilig an diesem vorbekannten Verfahren und der Vorrichtung ist, dass zum einen eine homogene Erwärmung der Werkstücke problematisch ist, ebenso wie die Abschirmung des Personals vor austretender Mikrowellenstrahlung. Auch die Leistungssteuerung erfordert einen hohen technischen Aufwand. Durch die Vielzahl der einzelnen schmalen Tragrollen ist zudem die Herstellung von homogenen Werkstücken schwierig.

Bekannt sind weiterhin ein Verfahren zur Herstellung eines Pressholzproduktes und eine Vorrichtung zum Durchführen eines solchen Verfahrens, US 6 287 410 B1, das den Oberbegriff des Anspruchs 1 offenbart, mit einer Doppelbandheizpresse mit oberen und unteren Tragrohren für die Werkstücke und dazwischen angeordneten stabförmigen Mikrowellenantennen einer Mikrowellenheizung in einem Gehäuse und mit mikrowellendurchlässigen Transportbändern, innerhalb dessen Gehäuse jedoch die Mikrowellenstrahlung unkontrolliert reflektiert wird, sodass die Heizleistung auf die Werkstücke nur sehr inhomogen genutzt werden kann und sich örtlich elektrische Spannungsspitzen bilden, die zu unerwünschten Lichtbögen führen können.

Eine andere bekannte Vorrichtung betrifft einen durch eine Mikrowellenheizung betriebenen Durchlaufofen für auf einem Transportband aufliegendes Schüttgut, US 4 570 045, mit seitlichen elektrisch leitenden Platten und einem elektrisch isolierten und spaltfreien Gehäuse, um die Erzeugung von Lichtbögen innerhalb des Gehäuses möglichst zu verhindern.

Aufgabe der Erfindung ist es, eine Doppelbandheizpresse mit einer Mikrowellenheizung zur Verfügung zu stellen, die bei hoher Strahlungssicherheit und vereinfachter Leistungssteuerung eine homogene Erwärmung und Verpressung der Werkstücke ermöglicht.

Die Lösung dieser Aufgabe ergibt sich in Verbindung mit den Merkmalen des Oberbegriffes erfindungsgemäß aus den technischen Merkmalen des kennzeichnenden Teils des ersten Hauptanspruches.

Die erfinderische Doppelbandheizpresse ist mit oberen und unteren Presstischen ausgestattet, die mit Rollen versehen als Rollentische ausgebildet sind, sowie mit Mikrowellenheizungen mit in Transportrichtung hintereinander angeordneten Strahlungsquellen und mit um Umlenkrollen umgelenkten mikrowellendurchlässigen Transportbändern, wobei die Rollen als Stützrollen für die quer zur Transportrichtung der Werkstücke an den Stützrollen anliegenden Tragrohre ausgebildet sind, so dass die Transportbänder über die Länge der Tragrohre großflächig abgestützt werden, sodass eine gleichmäßige homogene Verbindung der einzelnen Plattenkomponenten erzielt werden kann. Weiterhin sind in den Freiräumen zwischen horizontal benachbarten Tragrohren eines Rollentisches und seinem zugehörigen Transportband stabförmige Mikrowellenantennen als Strahlungsquellen parallel zu den Tragrohren angeordnet, wobei die vertikal quer verlaufenden Spalten zwischen zwei benachbarten horizontalen Transportrollen jeweils über Kontaktleisten strahlungsdicht kurzgeschlossen sind, die die Transportrollen möglichst spaltfrei miteinander elektrisch verbinden.

Die erfinderische Doppelbandheizpresse weist damit einen Mikrowellenofeninnenraum auf, der nach oben und unten durch die zueinander gewandten Zylinderflächen der Tragrohre und die nach innen zu den Transportbändern gerichteten Flächen der dazwischen angeordneten Kontaktleisten begrenzt ist. Die Höhe des Mikrowellenofeninnenraumes wird weiter durch die jeweilige Werkstückdicke bestimmt, der noch die doppelte Dicke der Transportbänder hinzugerechnet werden muss, wobei sich die Doppelbandheizpresse über eine Andruckvorrichtung mit Druckzylindern an unterschiedlich dicke Werkstücke anpassen lässt.

Diese Konstruktion erlaubt es, Werkstücke bzw. gezielt Kleber enthaltende Zwischenschichten der Werkstücke über die gesamte Werkstückbreite mittels einer Mikrowelleneinstrahlung zu erwärmen, wobei sich die einzelnen Mikrowellenantennen vorteilhafterweise bedarfsgerecht separat ansteuern lassen, deren Strahlung jedoch optimalerweise nicht aus dem strahlungsdicht ausgebildeten Innenraum der Doppelbandheizpresse austreten kann, bzw. wo Öffnungen erforderlich sind, sie in Absorberzonen weitestgehend absorbiert wird.

Weitere vorteilhafte Ausführungsformen der Erfindung ergeben sich mit und in Kombination aus den nachfolgenden Unteransprüchen.

Zur Gewährleistung der Strahlungsdichtheit nach außen sind die Stirnseiten der Tragrohre bevorzugterweise mit strahlungsdichten Abdeckungen versehen.

Weiterhin ist hierzu der mit den Mikrowellenantennen ausgestattete Bereich der Doppelbandheizpresse mit einem seitlichen strahlungsdicht geschlossenen Gehäuse ausgestattet, aus dem die stabförmigen Mikrowellenantennen beidseitig herausgeführt sind und auf der einen Seite an eine Mikrowellenstrahlungsquelle, wie einem Magnetron, angekoppelt und auf der gegenüberliegenden Seite in einer die Mikrowellenstrahlung reflektierenden Einspannung gehalten sind. Hierdurch wird es möglich, auf jeder Mikrowellenantenne eine stehende Welle zu erzeugen, wobei es weiterhin vorteilhaft ist, die Mikrowellenantennen unterschiedlich lang auszubilden, so dass die Strahlungsmaxima in Transportrichtung der Werkstücke einander folgender Mikrowellenantennen nicht immer an der gleichen Stelle erzeugt werden, sondern optimalerweise phasenverschoben zueinander angeordnet sind, insbesondere so, dass Bereichen ohne oder nur mit geringer Strahlungsleistung einer vorhergehenden Antenne Bereiche mit maximaler Strahlungsleistung der nachfolgenden Antenne folgen. Hierdurch wird auf einfache Art und Weise eine homogene Erwärmung der Kleberschicht ermöglicht.

Entsprechend einer weiteren vorteilhaften Ausgestaltung der Erfindung sind die Kontaktleisten zwischen den Tragrohren mit einer Vielzahl von eng nebeneinander angeordneten Kontaktlaschen ausgestattet, die elastisch an die Tragrohre angedrückt gehalten sind, so dass ein permanenter elektrischer Kontakt gewährleistet werden kann und die elektrische Spannung innerhalb der Heizzone der Doppelbandheizpresse weitestgehend homogen bleibt bzw. keine Spannungsspitzen entstehen, die sich in Lichtbögen abbauen könnten, was im Hinblick auf die Lebensdauer der Doppelbandheizpresse sicher ausgeschlossen werden muss.

Um auch im Ein- und Auslaufbereich der Doppelbandheizpresse ein Austreten von Mikrowellenstrahlung sicher zu vermeiden, ist dieses vorteilhaft im Einlauf- wie auch im Auslaufbereich jeweils mit einer Absorberzone ausgestattet, in der Mikrowellenabsorber zwischen den Transportbändern und den Presstischen angeordnet sind.

Gemäß einer weiteren vorteilhaften Ausgestaltung der Erfindung ist die Doppelbandheizpresse in ihrem vorderen Einlauf mit einer Scanvorrichtung zur Lage- und Größenerkennung von Werkstücken ausgestattet, die beispielsweise aus einer Vielzahl von Lichttastern besteht und die mit einer Steuerung zusammenarbeitet, die in werkstückfreien Bereichen, d.h. in den Lücken zwischen einander nachfolgender Werkstücke oder bei sehr schmalen Werkstücken die Leistung der Strahlungsquellen drosselt oder bei sehr großen Lücken sogar bis auf null reduziert. Hierdurch wird die Leistungsaufnahme der Doppelbandheizpresse in vorteilhafter Art und Weise auf die tatsächlich erforderliche Leistung begrenzt.

Entsprechend einer erfinderischen Ausbildung der Doppelbandheizpresse sind die Tragrohre des oberen und des unteren Rollentisches parallel übereinander angeordnet, wobei die Mikrowellenantennen in jedem zweiten Freiraum versetzt zu den Mikrowellenantennen des jeweils anderen Rollentisches angeordnet sind. Hierdurch wird erreicht, dass die Mirkowellenantennen sich möglichst wenig gegenseitig beeinflussen und insbesondere ein rückkopplungsarmer Betrieb möglich wird.

Eine weitere bevorzugte Ausführungsform des Gegenstandes der vorliegenden Doppelbandheizpresse weist zur Kühlung der Transportbänder Kühlplatten auf, die in den Bereichen der Leertrums der Transportbänder angeordnet sind.

Nachfolgend ist ein Ausführungsbeispiel der Erfindung anhand von Zeichnungen näher beschrieben. Es zeigen:
- Fig. 1: eine Prinzipskizze einer Doppelbandheizpresse in geschnittener Seitenansicht,
- Fig. 2: einen Einlaufbereich von Werkstücken in den Mikrowellenofeninnenraum der Doppelbandheizpresse der Fig. 1 in vergrößerter Darstellung,
- Fig. 3: eine weiter vergrößerte Schnittdarstellung des Ofeninnenraumes mit einer als dickem durchgehenden Linienzug dargestellter oberer und unterer Begrenzungsfläche,
- Fig. 4: eine skizzierte Draufsicht auf einen Rollentisch mit Stützrollen und Tragrohren in einer geschnittenen Teilansicht, und
- Fig. 5: eine Draufsicht auf ein mit mehreren unterschiedlichen Werkstücken belegtes Transportband.

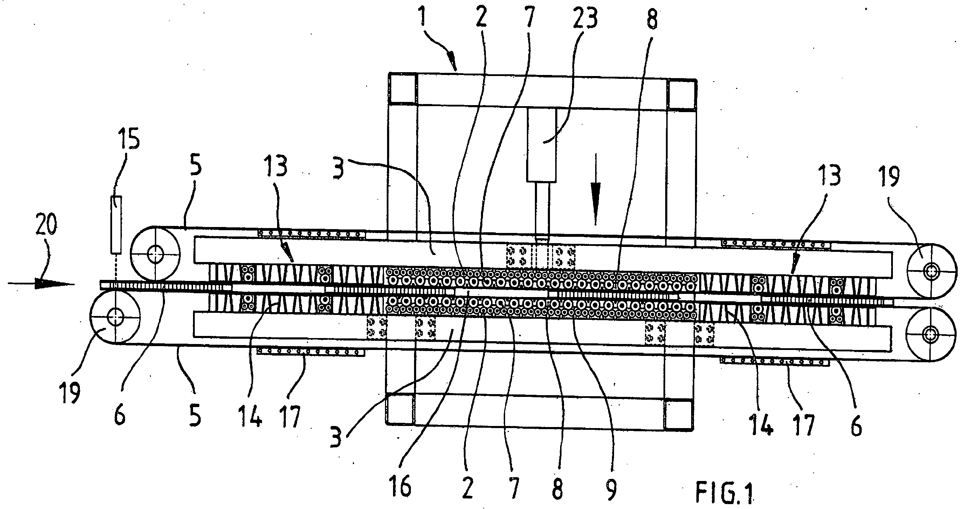

Die Doppelbandheizpresse 1, wie sie in Figur 1 als Prinzipskizze dargestellt ist, besteht aus unteren und oberen, als Rollentische 3 ausgebildeten Presstischen, die über einen oder mehrere Druckzylinder 23 gegeneinander und auseinander verfahren werden können, die so als Andruckvorrichtung und der Werkstückdickenanpassung dienen. Um die Ober- und Unterseiten der Rollentische 3 und um endseitige Umlenkrollen 19 herum verlaufen obere und untere Transportbänder 5, wobei diese sich im mittleren Pressbereich, der ein Einlaufmaul 24 aufweist, bzw. im Bereich des Mikrowellenofens auf rechtwinklig zur Transportrichtung 20 der Werkstücke 6;30;31 horizontal angeordneten Tragrohren 7 abstützen, die ihrerseits auf als Stützrollen 2 ausgebildeten Rollen der Rollentische 3 abrollen. In den Freiräumen 8 zwischen einem Transportband 5 und davon überspannten, horizontal benachbarten Tragrohren 7 verlaufen sich quer durch die Doppelbandheizpresse 1 hindurch erstreckende stabförmige Mikrowellenantennen 4, die jeweils seitlich im Gehäuse 25 gelagert sind.

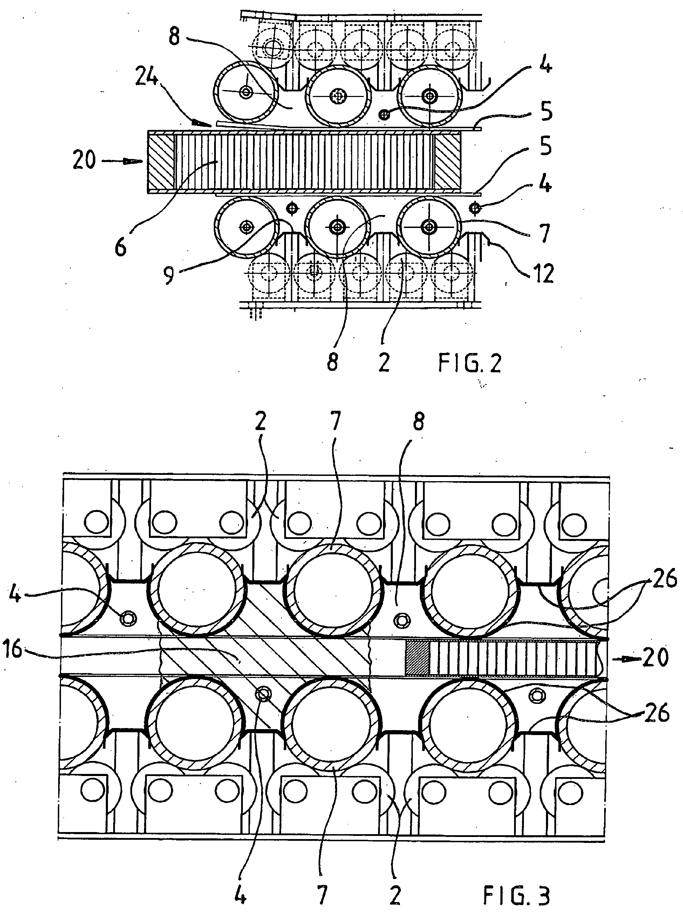

Die freien Spalten zwischen den Tragrohren 7 sind mittels elektrisch leitender und die Tragrohre 7 spaltfrei miteinander verbindenden Kontaktleisten 9 strahlungsdicht kurzgeschlossen, wie das insbesondere aus den Figuren 2 und 3 hervorgeht, so dass die Mikrowellenstrahlung weder nach oben, noch nach unten aus der Doppelbandheizpresse 1 austreten kann. Die Tragrohre 7 weisen dabei ein Längenmaß auf, welches dem Breitenmaß der Transportbänder 5 entspricht, wobei die Tragrohre 7 des oberen Rollentisches 3 parallel und unmittelbar gegenüber denjenigen des unteren Rollentisches 3 und die stabförmigen Mikrowellenantennen 4 in jedem zweiten Freiraum 8 angeordnet und die sich gegenüberliegenden Freiräume abwechselnd mit den Mikrowellenantennen 8 bestückt sind, um eine gegenseitige Beeinflussung weitgehend zu vermeiden.

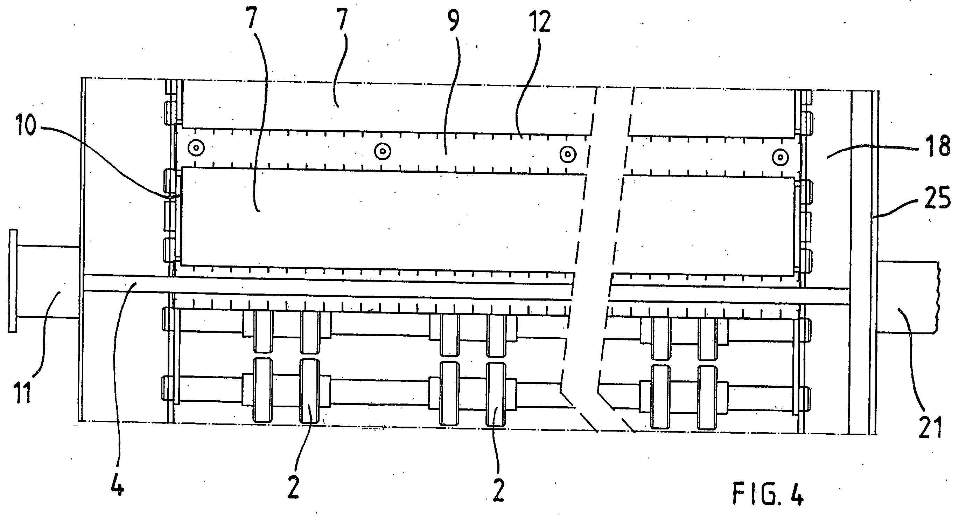

Um auch ein seitliches Austreten der Mikrowellenstrahlung zu verhindern, sind die Tragrohre 7 stirnseitig mit metallischen Abdeckungen 10 und das Gehäuse 25 mit seitlichen Abschirmwinkeln 18 versehen, wie dies in Figur 4 gezeigt ist.

Die Mikrowellenantennen 4 sind unterschiedlich lang ausgebildet und in über die Kontur des Gehäuses vorstehenden Einspannungen 11;21 gelagert, wobei an einer Einspannung 21 die Mikrowellenstrahlung von einer Strahlungsquelle 27;28;29 eingekoppelt wird und die gegenüberliegende Einspannung 11 die Strahlung reflektierend ausgebildet ist, so dass sich bei identischen Frequenzen der erzeugten Mikrowellenstrahlung stehende Wellen mit unterschiedlich positionierten Wellen- bzw. Stahlungsmaxima erzeugen lassen und ein Werkstück 6;30;31 während seines Transportes zwar an unterschiedlichen Stellen unterschiedlich stark erwärmt wird, aber über die Länge des Transportweges doch eine homogene Erwärmung der Kleberschicht erfährt. Bei einer Wellenlänge von 2,45 GHz lassen sich beispielsweise stehende Wellen mit etwa 12 cm Wellenlänge erzeugen, sodass durch eine Verlängerung einer zweiten Mikrowellenantenne 4 um 3 cm eine Verschiebung der Strahlungsmaxima in den Bereich der Strahlungsminima einer vorhergehenden ersten kürzeren Mikrowellenantenne 4 erzielt werden kann.

Die Kontaktleisten 9 sind mit einer Vielzahl von nebeneinander angeordneten Kontaktlaschen 12 ausgebildet, die elastisch an die Tragrohre 7 angedrückt gehalten sind, wodurch Potenzialunterschiede innerhalb des Ofenbereichs weitgehend minimiert werden können, ohne dass elektrische Lichtbögen erzeugt werden, die auf Dauer zu einer Schädigung der Heizung führen würden.

In den Ein- und Auslaufbereichen der Doppelbandheizpresse 1 sind Absorberzonen 13 gegen den Austritt von Mikrowellenstrahlung vorgesehen, wie dies auch in Figur 1 dargestellt ist, die mit Mikrowellenabsorbern 14 ausgestattet sind und einen Austritt von Mikrowellenstrahlen nach vorne oder hinten, in oder entgegen der Transportrichtung 20 von Werkstücken 6;30;31 verhindern. Die Doppelbandheizpresse 1 weist einen als Mikrowellenofen interpretierbaren Innenraum 16 auf, der nach oben und unten durch die zueinander gewandten Zylinderflächen der Tragrohre 7 und die nach innen gerichteten Flächen der dazwischen angeordneten Kontaktleisten 9 begrenzt ist, sodass diese eine gemeinsame Begrenzungsfläche 26 bzw. eine geschlossene Ofeninnenwand bilden. Die Höhe des Innenraumes 16 wird neben den Durchmessern der Tragrohre 7 und dem Ort des Linienkontaktes der Kontaktleisten 9 mit der Oberfläche der Tragrohre 7 weiterhin bestimmt durch die Dicken der Werkstücke 6;30;31 und der Transportbänder 5, wie dies insbesondere aus der Figur 3 hervorgeht.

Vor dem Einlauf in die Doppelbandheizpresse 1 ist eine Scanvorrichtung 15 zur Lage- und Größenerkennung von Werkstücken 6;30;31 vorgesehen, die beispielsweise aus einer Vielzahl von Lichttastern besteht, deren Daten dazu genutzt werden, die Leistung der Mikrowellenquellen 27;28;29 in Abhängigkeit der Belegung der Transportbänder 5 zu steuern, d.h. bei großen flächigen Werkstücken 6;30;31 die Mikrowellenheizung mit 100% Leistung zu betreiben, aber bei schmaleren Werkstücken 30;31 die Leistung auf beispielsweise 30% für ein sehr schmales Werkstück 30 oder auf 60% für ein weniger schmales Werkstück 31 zu reduzieren oder bei großen Lücken 32;33 zwischen zwei aufeinander folgenden Werkstücken 30;6;31 die Leistung der Mikrowellenquelle 27;28;29 sogar bis auf null zu reduzieren.

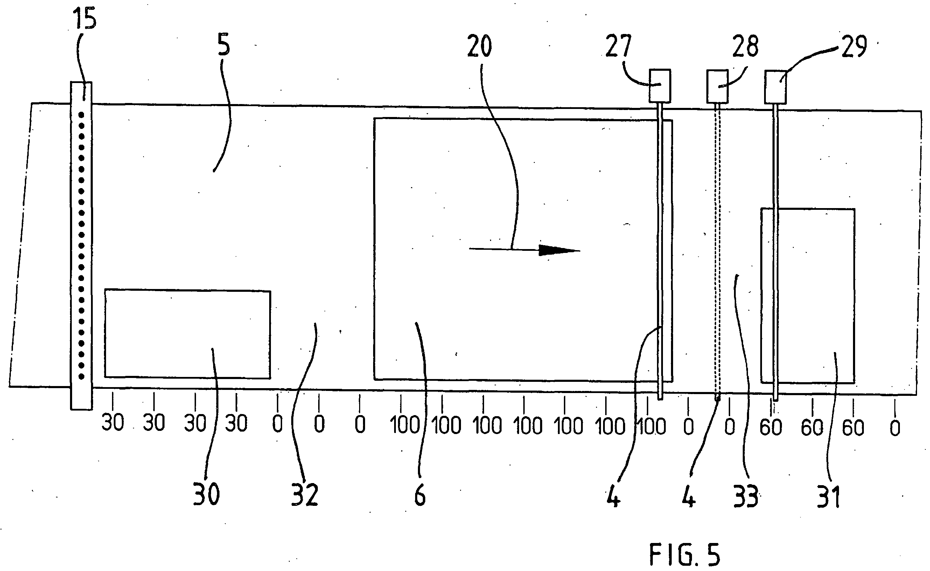

Die in der Figur 5 unter dem Transportband 5 dargestellten Zahlen zwischen 0, 30, 60 und 100 geben Prozentzahlen der jeweils eingesetzten Leistung der ortsfesten Mikrowellenantennen 4 bzw. deren Mikrowellenquellen 27;28;29 für die von der Scanvorrichtung 15 ermittelte Belegung des Transportbandes 5 mit Werkstücken 30;6;31 an. Die Transportbänder 5 werden bei Bedarf außerhalb der Rollentische 3 mittels Kühlplatten 17 gekühlt.

## Patentansprüche

1. Doppelbandheizpresse (1) mit mit Rollen als Rollentische (3) ausgebildeten oberen und unteren Presstischen, Mikrowellenheizungen mit in Transportrichtung (20) hintereinander angeordneten Strahlungsquellen und mikrowellendurchlässigen Transportbändern (5), wobei die Rollen als Stützrollen (2) für quer zur Transportrichtung (20) von Werkstücken (6;30;31) an den Stützrollen (2) abgestützte Tragrohre (7) ausgebildet sind, auf denen die Transportbänder (5) abrollen und in Freiräumen (8) zwischen horizontal benachbarten Tragrohren (7) und einem Transportband (5) als Strahlungsquellen stabförmige Mikrowellenantennen (4) parallel zu den Tragrohren (7) angeordnet sind, **dadurch gekennzeichnet, dass** Spalten zwischen zwei horizontal benachbarten Tragrohren (7) mit diese elektrisch miteinander verbindenden Kontaktleisten (9) strahlungsdicht kurzgeschlossen sind, und dadurch ein Mikrowellenofeninnenraum (16) erzeugt ist, der nach oben und unten durch die zueinander gewandten Zylinderflächen der Tragrohre (7) und die nach innen gerichteten Flächen der dazwischen angeordneten Kontaktleisten (9) begrenzt ist, sodass diese eine gemeinsame Begrenzungsfläche (26) bilden.

2. Doppelbandheizpresse nach Anspruch 1, **dadurch gekennzeichnet, dass** die Tragrohre (7) stirnseitig mit strahlungsdichten Abdeckungen (10) versehen sind.

3. Doppelbandheizpresse nach einem der vorgenannten Ansprüche, **dadurch gekennzeichnet, dass** sie ein seitlich strahlungsdicht geschlossenes Gehäuse (25) aufweist, aus dem die stabförmigen Mikrowellenantennen (4) beidseitig herausgeführt und auf einer Seite (21) an eine Mikrowellenstrahlungsquelle (27;28;29) angekoppelt und auf der gegenüberliegenden Seite in einer die Mikrowellenstrahlung reflektierenden Einspannung (11) gehalten sind.

4. Doppelbandheizpresse nach Anspruch 3, **dadurch gekennzeichnet, dass** die Mikrowellenantennen (4) unterschiedlich lang ausgebildet sind und von den Mikrowellenstrahlungsquellen (27;28;29) jeweils stehende Wellen darauf erzeugbar sind, deren Strahlungsmaxima in Transportrichtung (20) der Werkstücke (6;30;31) hintereinander folgender Mikrowellenantennen (4) über die Länge der Mikrowellenantennen (4) zueinander phasenverschoben angeordnet sind.

5. Doppelbandheizpresse nach einem der vorgenannten Ansprüche, **dadurch gekennzeichnet, dass** die Kontaktleisten (9) jeweils mit einer Vielzahl von eng nebeneinander angeordneten Kontaktlaschen (12) ausgestattet sind, die elastisch an die Tragrohre (7) angedrückt gehalten sind.

6. Doppelbandheizpresse nach einem der vorgenannten Ansprüche, **dadurch gekennzeichnet, dass** sie Ein- und Auslaufbereiche an den Rollentischen (3) aufweist, die als Absorberzonen (13) gegen den Austritt von Mikrowellenstrahlung mit Mikrowellenabsorbern (14) ausgestattet sind.

7. Doppelbandheizpresse nach einem der vorgenannten Ansprüche, **dadurch gekennzeichnet, dass** sie im Einlauf der Werkstücke (6) mit einer Scanvorrichtung (15) zur Lage- und Größenerkennung von Werkstücken (6;30;31) ausgestattet ist, sowie mit einer Steuerung, die in werkstückfreien Bereichen größerer Werkstücklücken oder bei schmalen Werkstücken (6;30;31) die Leistung der darüber befindlichen Mikrowellenantennen (4) drosselt oder bis auf null reduziert.

8. Doppelbandheizpresse nach einem der vorgenannten Ansprüche, **dadurch gekennzeichnet, dass** die Tragrohre (7) des oberen und des unteren Rollentisches (3) parallel übereinander und die Mikrowellenantennen (4) in jedem zweiten Freiraum (8) abwechselnd versetzt zu den Mikrowellenantennen (4) des jeweils anderen Rollentisches (3) angeordnet sind.

9. Doppelbandheizpresse nach einem der vorgenannten Ansprüche, **dadurch gekennzeichnet, dass** die Leertrums der Transportbänder (5) entlang von Kühlplatten (17) geführt und bei Bedarf kühlbar ausgebildet sind.

## Claims

1. Double-belt heating press (1) having upper and lower pressing tables which using rollers are configured as roller tables (3), having microwave heating units having radiation sources, disposed in sequence in the conveying direction (20), and microwave-permeable conveyor belts (5), wherein the rollers are configured as support rollers (2) for support tubes (7) which are supported in a manner transverse to the conveying direction (20) of workpieces (6; 30; 31) on the support rollers (2) and over which the conveyor belts (5) roll, and rod-shaped microwave antennae (4) are disposed as radiation sources in voids (8) between horizontally adjacent support tubes (7) and a conveyor belt (5) so as to be parallel with the support tubes (7), **characterized in that** gaps between two horizontally adjacent support tubes (7) by way of contact strips (9) which electrically interconnect the former are hot-wired in a radiation-tight manner and, on account thereof, a microwave-oven interior space (16) which is delimited upwardly and downwardly by the mutually facing cylinder faces of the support tubes (7) and by the inwardly directed faces of the interdisposed contact strips (9) such that the latter form a common delimitation face (26) is produced.

2. Double-belt heating press according to Claim 1, **characterized in that** the support tubes (7) at the end face are provided with radiation-tight covers (10).

3. Double-belt heating press according to one of the preceding claims, **characterized in that** said double-belt heating press has a housing (25) which is laterally closed in a radiation-tight manner and from which the rod-shaped microwave antennae (4) are routed out on both sides and on one side (21) are linked to a microwave radiation source (27; 28; 29) and on the opposite side are held in a mounting (11) which reflects the microwave radiation.

4. Double-belt heating press according to Claim 3, **characterized in that** the microwave antennae (4) are configured so as to be of dissimilar lengths and in each case standing waves of which the radiation maxima of successive microwave antennae (4) in the conveying direction (20) of the workpieces (6; 30; 31) are disposed so as to be phase-delayed with respect to one another across the length of the microwave antennae (4) are producible on the latter by the microwave radiation sources (27; 28; 29).

5. Double-belt heating press according to one of the preceding claims, **characterized in that** the contact strips (9) are in each case equipped with a multiplicity of contact lugs (12) which are disposed tightly beside one another and which are held so as to be elastically pressed onto the support tubes (7).

6. Double-belt heating press according to one of the preceding claims, **characterized in that** said double-belt heating press on the roller tables (3) has inlet and outlet regions which are equipped as absorber zones (13) having microwave absorbers (14) for countering the leakage of microwave radiation.

7. Double-belt heating press according to one of the preceding claims, **characterized in that** said double-belt heating press in the inlet of the workpieces (6) is equipped with a scanning device (15) for identifying the position and the size of workpieces (6; 30; 31), and with a controller which in the workpiece-free regions of comparatively large gaps between workpieces or in the case of narrow workpieces (6; 30; 31) curbs the output of the microwave antennae (4) located thereabove or reduces the latter to zero.

8. Double-belt heating press according to one of the preceding claims, **characterized in that** the support tubes (7) of the upper and of the lower roller tables (3) are disposed in parallel on top of one another, and the microwave antennae (4) in every second void (8) are disposed in an alternatingly offset manner in relation to the microwave antennae (4) of the respective other roller table (3).

9. Double-belt heating press according to one of the preceding claims, **characterized in that** the trailing belt strands of the conveyor belts (5) are guided along cooling plates (17) and are configured so as to be capable of being cooled on demand.

## Revendications

1. Presse à chaud à double bande (1) comportant des plateaux de presse supérieur et inférieur munis de rouleaux et réalisés sous la forme de plateaux à rouleaux (3), des dispositifs chauffants à micro-ondes comportant des sources de rayonnement disposées les unes derrière les autres dans la direction de transport (20) et des bandes de transport (5) transparentes aux micro-ondes, dans laquelle les rouleaux sont réalisés sous la forme de rouleaux de support (2) destinés à des tubes de support (7) supportés transversalement à la direction de transport (20) de pièces à usiner (6 ; 30 ; 31) sur les rouleaux de support (2), tubes de support sur lesquels roulent les bandes de transport (5), et dans laquelle des antennes micro-ondes (4) en forme de tiges sont disposées en tant que sources de rayonnement parallèlement aux tubes de support (7) dans les espaces libres (8) entre des tubes de support (7) horizontalement voisins et une bande de transport (5), **caractérisée en ce que** des colonnes, entre deux tubes de support (7) horizontalement voisins, sont court-circuitées avec ces derniers de manière étanche au rayonnement au moyen de barres de contact (9) qui les connectent électriquement les unes aux autres et **en ce qu'**un espace interne de four à micro-ondes (16) est produit, celui-ci étant délimité vers le haut et vers le bas par les surfaces de cylindre mutuellement opposées des tubes de support (7) et par les surfaces orientées vers l'intérieur des barres de contact (9) disposées entre ceux-ci, de manière à ce que ces surfaces forment une surface de délimitation (26) commune.

2. Presse à chaud à double bande selon la revendication 1, **caractérisée en ce que** les tubes de support (7) sont munis sur la face avant de couvercles (10) étanches au rayonnement.

3. Presse à chaud à double bande selon l'une quelconque des revendications précédentes, **caractérisée en ce qu'**elle comprend un boîtier (25) fermé latéralement de manière étanche au rayonnement, depuis lequel les antennes micro-ondes (4) en forme de tiges sont guidées des deux côtés et sont maintenues couplées d'un côté (21), à une source de rayonnement micro-ondes (27 ; 28 ; 29), et du côté opposé, dans un moyen de fixation (11) réfléchissant le rayonnement micro-ondes.

4. Presse à chaud à double bande selon la revendication 3, **caractérisée en ce que** les antennes micro-ondes (4) sont réalisées de manière à avoir des longueurs différentes et **en ce que** des ondes stationnaires peuvent respectivement être générées par les sources de rayonnement micro-ondes (27 ; 28 ; 29), dont les maxima de rayonnement sont disposés de manière déphasée les uns par rapport aux autres dans la direction de transport (20) des pièces à usiner (6 ; 30 ; 31) d'antennes micro-ondes consécutives (4) sur la longueur des antennes micro-ondes (4).

5. Presse à chaud à double bande selon l'une quelconque des revendications précédentes, **caractérisée en ce que** les barres de contact (9) sont respectivement dotées d'une pluralité de pattes de contact (12) disposées côte à côte de manière serrée et qui sont maintenues comprimées de manière élastique sur les tubes de support (7).

6. Presse à chaud à double bande selon l'une quelconque des revendications précédentes, **caractérisée en ce qu'**elle comprend des zones d'entrée et de sortie au niveau des plateaux à rouleaux (3), qui sont munies d'absorbants micro-ondes (14) en tant que zones absorbantes (13) empêchant la sortie de rayonnement micro-ondes.

7. Presse à chaud à double bande selon l'une quelconque des revendications précédentes, **caractérisée en ce qu'**elle est dotée, dans la zone d'entrée des pièces à usiner (6), d'un dispositif de balayage (15) destiné à détecter la position et la taille des pièces à usiner (6 ; 30 ; 31) et d'un dispositif de commande qui, dans les zones exemptes de pièces à usiner ayant des lacunes de pièces à usiner plus importantes ou dans le cas de pièces à usiner (6; 30; 31) étroites, régule ou réduit à zéro la puissance des antennes micro-ondes (4) au-dessus de celles-ci.

8. Presse à chaud à double bande selon l'une quelconque des revendications précédentes, **caractérisée en ce que** les tubes de support (7) des plateaux à rouleaux supérieur et inférieur (3) sont disposés parallèlement les uns au-dessus des autres et **en ce que** les antennes micro-ondes (4) sont décalées de manière alternée dans un espace libre (8) sur deux par rapport aux antennes micro-ondes (4) de l'autre plateau à rouleaux (3) respectif.

9. Presse à chaud à double bande selon l'une quelconque des revendications précédentes, **caractérisée en ce que** les tronçons de retour des bandes de transport (5) sont guidés le long de plaques de refroidissement (17) et sont conçus pour pouvoir être refroidis selon les nécessités.
